# EUROPEAN PATENT APPLICATION

(11) **EP 0 714 750 A1**
(43) Date of publication of application: **05.06.1996**
(21) Application number: 95118622.0
(22) Date of filing: 27.11.1995
(51) Int. Cl.: B29C 49/00, B29C 65/74

(54) **Equipment for moulding components with cores of thermoplastic material**

(30) Priority: 29.11.1994 IT TO940974
(71) Applicant: Cesano, Franco, I-10060 San Secondo di Pinerolo (IT)
(72) Inventor: Cesano, Franco, I-10060 San Secondo di Pinerolo (IT)
(74) Representative: Marchitelli, Mauro

(57) **Abstract**

Equipment for moulding components each having a core formed by two layers of thermoplastic material joined together along a join line comprises first and second half-dies (4, 8) having a sharp cutting portion (24) and a substantially flat abutment surface (26), respectively. The equipment also comprises spacer means (36) for limiting the relative movement of the two half-dies (4, 8) towards one another so that there is a predetermined clearance (38) between the sharp cutting portion (24) and the abutment surface (26) when the half-dies are in the closure position.

## Description

The present invention relates to the moulding of components, particularly for the motor industry, each component having a core of thermoplastic material to which an aesthetic coating is applied.

More precisely, the invention relates to equipment for moulding components each having a core formed by two layers of thermoplastic material joined together along a join line.

In recent years, the Applicant has developed a moulding technique which has formed the subject of various patent applications and which provides for the use of compressed air injected between two layers of heated thermoplastic material in order to shape them against the internal walls of a die. This moulding technique has been found very versatile and is used to produce many different components.

Amongst other things, this moulding technique enables a covering to be applied to the core of thermoplastic material simultaneously with the moulding of the component and, moreover, the layers of thermoplastic material and any covering layers are trimmed by means of cutting members which form part of the moulding equipment.

The object of the present invention is to bring about an improvement of this moulding technique which is directed towards accurate cutting of the layers of thermoplastic material and of any covering layers, achieving an aesthetic effect.

According to the present invention, this object is achieved by the provision of moulding equipment having the characteristics which form the subject of the claims.

The main innovative characteristic of the present invention consists of the execution of a punching-type cut by means of a sharp cutting portion carried by one half-die, cooperating with a substantially flat abutment surface carried by the other half-die. In operation, the sharp cutting surface never contacts the abutment surface directly since spacer means limit the relative movement of the half-dies towards one another so that there is a predetermined clearance between the sharp cutting surface and the abutment surface when the half-dies are in the closure position. This considerably reduces wear of the die and enables the qualitative performance of the moulding equipment to be kept virtually unchanged over time.

Further characteristics and advantages of the present invention will become clear in the course of the detailed description which follows, purely by way of non-limiting example, with reference to the appended drawings, in which:
Figure 1 shows a press with moulding equipment according to the present invention,
Figure 2 is a perspective view of a component produced with the equipment according to the invention,
Figure 3 is a section taken on the line III-III of Figure 2,
Figure 4 is a schematic section taken on the line IV-IV of Figure 1, and
Figures 5 and 6 are sections corresponding to that of Figure 4, showing the moulding process.

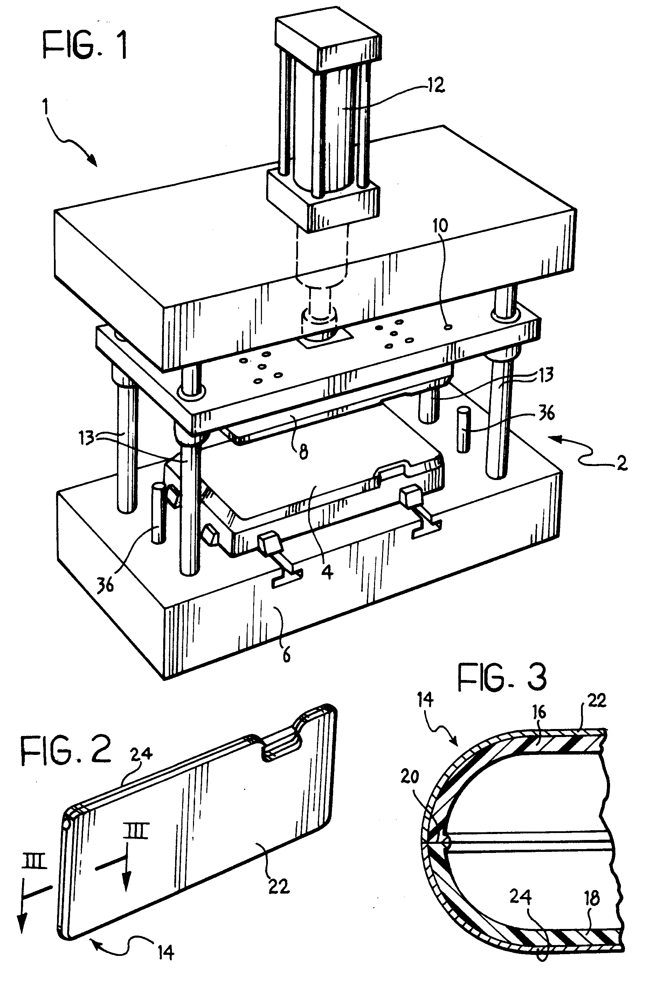

With reference initially to Figure 1, a press, indicated 1, has moulding equipment 2 including a lower half-die 4 fixed to the base 6 of the press 1 and an upper half-die 8 carried by a plate 10 which is movable vertically along guides 13 and is operated, in conventional manner, by means of a hydraulic cylinder 12.

Figures 2 and 3 show a component 14 produced by the equipment according to the invention. In the embodiment shown, the component 14 is a sun visor for vehicles but it is intended that the equipment described below may be used to produce various components both for the motor industry (panels or the like) and for other industries. Typically, the component 14 is formed by a core constituted by two layers 16, 18 of thermoplastic material joined together along a perimetral join line 20.

The layers of thermoplastic material 16, 18 may be covered on their outer surfaces by covering layers 22, 24 of woven or non-woven fabric, coupled PVC etc. The covering layers are applied to the layers of thermoplastic material during the moulding of the component and the covering layers are fixed simply by compression against the heated thermoplastic material.

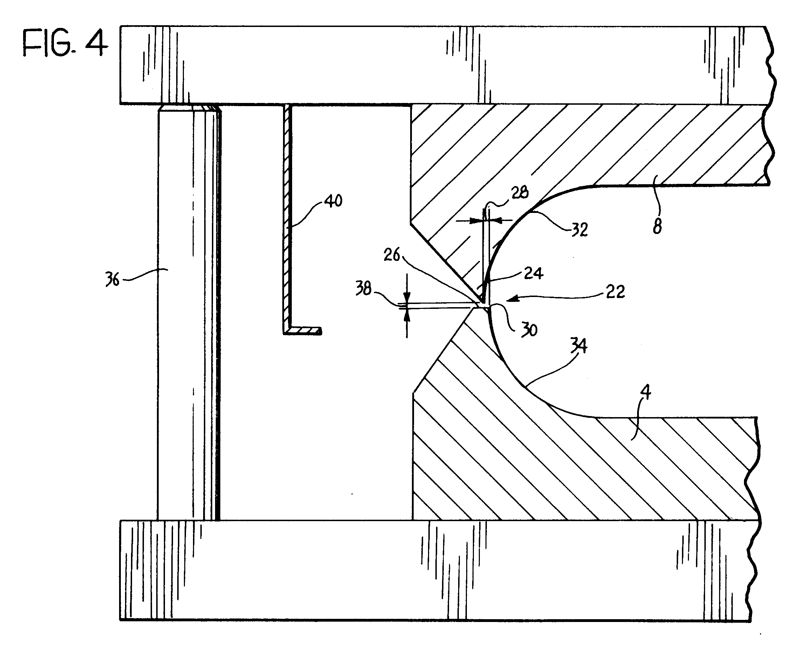

With reference to Figure 4, it can be seen that the perimetral portions of the two half-dies 4, 8 are shaped so as to define a cutting region 22 defined between a sharp portion 24 and a substantially flat abutment surface 26. In the embodiment shown in the drawings, the sharp portion 24 is formed integrally with the upper half-die 8, whereas the abutment surface 26 is formed on the lower half-die 4 but it is intended that this arrangement could be reversed.

The vertex of the sharp portion 24 is positioned at an intermediate point of the abutment surface 26 so that there is a small clearance, indicated 28, between the vertex of the sharp portion 24 and the inner edge 30 of the abutment surface 26.

The dimensions of the clearance 28 have been exaggerated in Figure 4 to facilitate understanding. The clearance 28 is actually of the order of a few tenths of a millimetre so that the imperfection due to the imperfect match between the meeting surfaces 32, 34 is not noticed in the finished component. The fact that a sharp cutting portion cooperates with the substantially flat abutment surface simplifies the construction of the die since it is not necessary for two pointed surfaces to match perfectly.

Spacer elements, such as that indicated 36 in Figure 4, interposed between the two half-dies 4, 8, have the purpose of limiting the relative movement of the half-dies 4, 8 towards one another so that there is a predetermined clearance, indicated 38, between the sharp cutting portion 24 and the abutment surface 26 when the half-dies are in the closure configuration shown in Figure 4. This means that the closing force of the press is discharged through the spacer elements 26 without there being any direct contact between the half-dies 4, 8 along the cutting region 22.

It will be understood that the absence of contact between the half-dies along the cutting region enables the dies to have a long life since it avoids stresses concentrated on the sharp cutting portion 24, which would cause it to deteriorate rapidly.

The upper half-die 8 carries a guide 40 which serves to support a positioning frame on which a covering layer is extended for application to the component to be moulded.

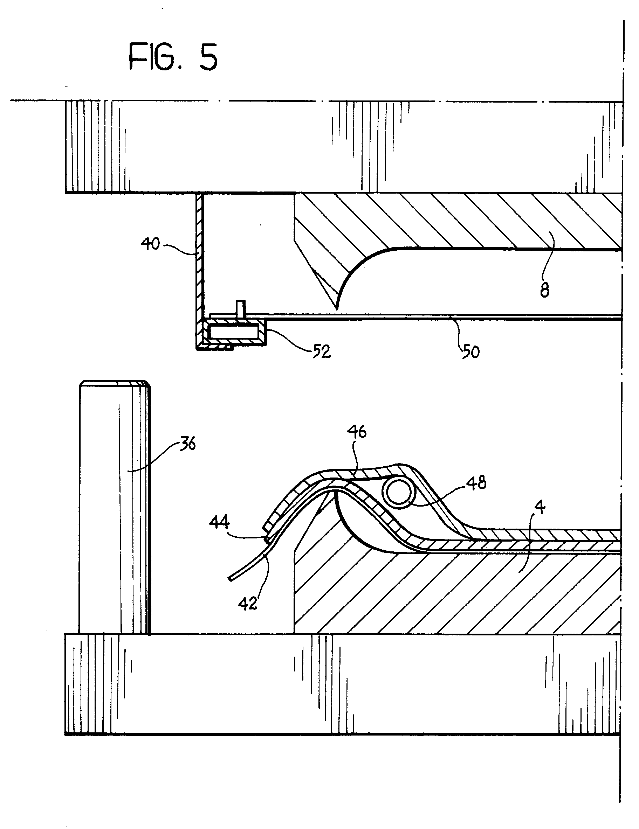

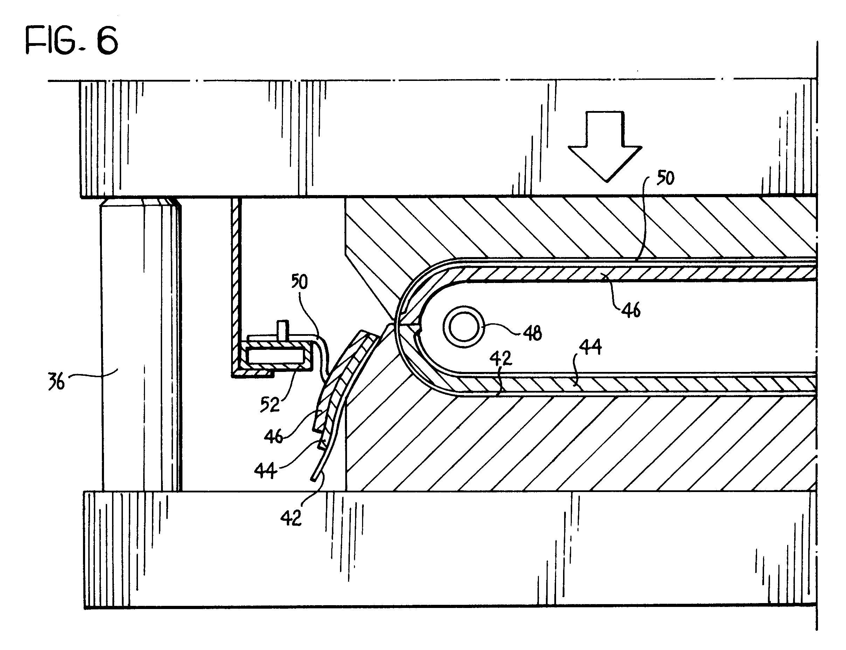

The operation of the moulding equipment will now be described with reference to Figures 5 and 6.

Figure 5 shows the preparatory stage, during which the half-dies 4, 8 are in the open position and a first covering layer 42, a first layer of heated thermoplastic material 44 and a second layer of heated thermoplastic material 46 are superposed, in order, on the lower half-die 4. A nozzle 48 which supplies compressed air to the interior of the die is interposed between the two layers of thermoplastic material 44, 46.

During this first stage, the pressure of the air supplied through the nozzle 48 is relatively low and has the sole purpose of preventing adhesion between the two layers 44, 46. A second covering layer 50 is positioned on a frame 52 which is supported by the guide 40.

After the various layers have been arranged as shown in Figure 5, the two half-dies 4, 8 are closed and air is supplied at high pressure through the nozzle 48. As can be seen in Figure 6, the jet of compressed air urges the layers of thermoplastic material 44, 46 against the internal surfaces of the die. The shaping of the layers of thermoplastic material, the application of the covering on the outer surfaces of the component, as well as the cutting of the portions of the layers of thermoplastic material and of the layers of covering which are situated outside the die, are achieved in a single step.

Experience has shown that it is possible to cut the coverings 42 and 50 and the layers of thermoplastic material 44, 46 even without direct contact between the sharp cutting portion 24 and the abutment surface 26. In fact, the clearance 38 in the cutting region 22 (Figure 4) is so small that it permits precise cutting and an excellent degree of surface finishing in the region of the join between the layers of thermoplastic material and between the coverings.

## Claims

1. Equipment for moulding components each having a core formed by two layers of thermoplastic material (16, 18) joined together along a join line (20), comprising first and second half-dies (4, 8) which can move relative to one another and have mutually cooperating cutting means for cutting the layers of thermoplastic material (16, 18) and any covering layers (42, 50), characterized in that the cutting means comprise a sharp cutting portion (24) carried by the first half-die (4) and a substantially flat abutment surface (26) carried by the second half-die (8), and in that the equipment comprises spacer means (36) for limiting the relative movement of the two half-dies (4, 8) towards one another, so that there is a predetermined clearance (38) between the sharp cutting portion (24) and the abutment surface (26) when the half-dies (4, 8) are in the closure position.

2. Equipment according to Claim 1, characterized in that the vertex of the cutting portion (24) is situated at a certain distance (28) from an edge (30) of the abutment surface (26) which faces inwardly of the die when the two half-dies (4, 8) are in the closed configuration.

3. Equipment according to Claim 1, characterized in that the sharp cutting portion (24) is connected to a shaping surface (32) with an arcuate profile.

4. Equipment according to Claim 2, characterized in that the inner edge (30) of the abutment surface (26) is connected to a shaping surface (34) with an arcuate profile.
